(19) Europäisches Patentamt
European Patent Office
Office européen des brevets

(11) Publication number: **0 176 640 B1**

(12) # EUROPEAN PATENT SPECIFICATION

(45) Date of publication of patent specification: **12.07.89**

(51) Int. Cl.⁴: **B 29 C 33/64**

(21) Application number: **84306825.5**

(22) Date of filing: **05.10.84**

(54) **Preparation of Lignocellulosic-isocyanate molded compositions using a terpolymer of a functional polysiloxane-isocyanate-carboxylic acid or salt thereof as release agent.**

(43) Date of publication of application:
**09.04.86 Bulletin 86/15**

(45) Publication of the grant of the patent:
**12.07.89 Bulletin 89/28**

(84) Designated Contracting States:
**BE DE FR GB IT NL SE**

(56) References cited:
**EP-A-0 061 261**
**EP-A-0 116 966**
**FR-A-2 250 780**
**FR-A-2 255 329**
**US-A-3 919 017**

(73) Proprietor: **ARCO CHEMICAL TECHNOLOGY INC.**
**3 Christina Centre Suite 902 201 N Walnut Street**
**Wilmington Delaware 19801 (US)**

(72) Inventor: **Nguyen, Tinh**
**201 Sportsman Way**
**Gaithersburg, MD 20878 (US)**
Inventor: **Gaul, James M.**
**224 Autumn Drive**
**Exton, PA 19341 (US)**

(74) Representative: **Cropp, John Anthony David et al**
**MATHYS & SQUIRE 10 Fleet Street**
**London, EC4Y 1AY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to the compression molding of lignocellulosic materials into composite bodies, sheets and the like and more particularly to a method for the preparation of particle or flake board with a polyisocyanate binder and the use of a terpolymer which is the reaction product of a functional polysiloxane, an isocyanate, and a hydroxyl substituted monocarboxylic acid or metal salt thereof as a release agent capable of providing an ease of release and multiple release from the forming mold surfaces.

The molding of lignocellulosic and lignocellulosic-containing fibers, particles or layers to form composite articles is known. Organic di- and polyisocyanates as useful binders for lignocellulose materials have been known for some time and give to particle board products increased stability and mechanical strength; see, for example, 3,428,592; 3,440,189; 3,557,263; 3,636,199; 3,870,665; 3,919,017 and 3,930,110. It is also known in the art that the isocyanate binders are mixed with the wood particles utilized as the base for the particle board. A wood chip or particle and isocyanate binder mixture is then formed into a mat and molded with pressure and temperature to the desired size or shape. Water emulsion polyisocyanate binder systems for use with lignocellulosic particles to prepare particle board are also known. A principal disadvantage of the use of isocyanates in the preparation of particle board is due to their excellent adhesive properties. Thus, isocyanate systems, either the water emulsion or the straight polyisocyanate binders, stick tenaciously to the metal caul plates which are employed to support the wood particles during transporting and the pressing or molding processes. The resultant poor release of the molded particle board from the caul or mold surface creates difficulty in the cleaning and automatic handling of the cauls. In order to prevent the sticking problem, external release agents have been developed and applied to the caul plates or platens or mat surface as described for example in U.S. Patent No. 4,110,397. Other conventional release agents such as oils, waxes, polishes, silicones and polytetrafluoroethylene have been unsatisfactory as have the specialized urethane release agents including those used in structural foam applications. Another method of overcoming the sticking problem has been to overlay the isocyanate bound lignocellulosic particles with a veneer of wood as shown, for example, in U.S. Patent Nos. 3,390,110; 4,197,219 and 3,919,017, or to use a release paper. These methods have the disadvantage of either adding more cost to the product or of not fully utilizing the superiority of the isocyanate binder. Many of the release agents developed to date have to be applied during every composite production cycle in large quantities to be effective.

It is an object of the present invention to provide novel compositions which serve as release agents and provide for multiple release of the molded articles, are readily applied and adhere to the mold surfaces, and need only be applied in small amounts.

According to the present invention there is provided a process for the preparation of lignocellulosic composite molded articles wherein lignocellulosic particles are contacted with an organic polyisocyanate-based binder composition and the treated particles are subsequently formed into molded articles by the application of heat and pressure, characterised in that a film coating of a terpolymer which is formed by reacting a functional polysiloxane, a hydroxyl substituted monocarboxylic acid or metal salt thereof and an isocyanate is provided on the mold surface or surfaces to facilitate release of the lignocellulosic article, said functional polysiloxane having the formula:

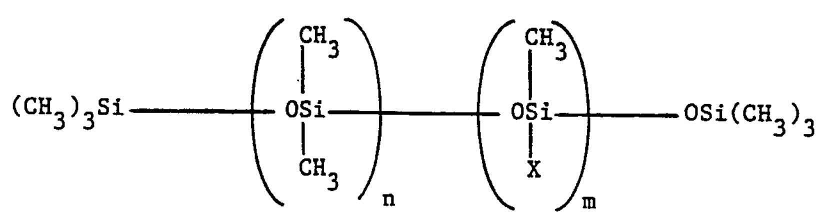

wherein n is an integer of from 5 to 30, m is an integer of from 1 to 20 and X is a group selected from $—CH_2OH$, $—CH(CH_3)OH$, $—C(CH_3)_2OH$, $—COOH$ or $—OH$, said hydroxyl substituted monocarboxylic acid or metal salt thereof being a hydroxyl substituted derivative of an acid or salt having the formula $[CH_3—(CH_2)_y—COO]_xZ$ wherein y is an integer of from 5 to 24, Z is a group selected from hydrogen, Na, Li, Ca, Ba, Cd, Mg, K and Fe, and x is the valency of Z, and said isocyanate having the formula R—NCO wherein R is a group selected from

$-CH_2(CH_2)_y-NCO$, $CH_3-(CH_2)_y-$, 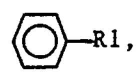, 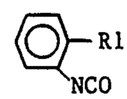 or 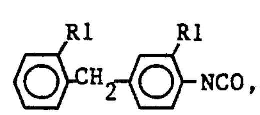, R1 being hydrogen or an alkyl group having from 1 to 6 carbon atoms and y being an integer of from 1 to 20.

In accordance with the invention, lignocellulosic composite molded articles, particularly particle

boards, are prepared by bonding together wood chips or other lignocellulosic material using heat and pressure with an organic polyisocyanate employed as the binding agent and with the application of a film of release agent to the mold surface or surfaces e.g. by dipping, spraying or wiping of the terpolymer of the functional polysiloxane, isocyanate and hydroxyl substituted monocarboxylic acid or metal salt thereof.

To form the terpolymer release agent of the present invention a functional polysiloxane having the formula given above is reacted with a hydroxyl substituted derivative of a monocarboxylic acid or salt thereof having the formula given above, and the reaction product is in turn reacted with an isocyanate having the formula R—NCO wherein R is as defined above.

For essentially permanent release or longer production use cycles, the mold surface of surfaces with film applied may be heated to between 75°C and 200°C. for from 1 to 5 minutes before use.

The molded lignocellulosic composite such as, for example, particle board or flake board is generally prepared by spraying the particles with the polyisocyanate binder as they are being mixed or agitated in suitable and conventional equipment such as a blender. Suitably, the polyisocyanate binder use levels, based on the weight of oven dried (0% moisture content) lignocellulosic material is from 1.5 to 12 and preferably 2.5 to 6.5 weight percent. Other materials such as fire retardants may also be added to the particles or sprayed with the binder during the blending or mixing step.

After forming a uniform mixture the coated lignocellulosic particles are formed into a loose mat or felt in the desired proportions onto a caul plate of polished aluminium or steel which serves to carry the "cake" into the heated press to consolidate the wood particles into a board of desired thickness. Temperatures of the press are generally between 140°C and 220°C and pressures of from $6.9 \times 10^2$ kPa to $4.1 \times 10^3$ kPa (100 to 600 psi). Pressing times are from 1 to 10 preferably 3 to 5 minutes. Pressing times, temperatures and pressures vary widely depending on the thickness of the board produced, the desired density of the board, the size of the lignocellulosic particles used, and other factors well known in the art.

The isocyanate binding agent will generally be an organic polyisocyanate used alone but may also be in admixture with another type of binding agent, e.g. a synthetic resin glue, or in admixture with diluents such as propylene carbonate. The isocyanate may be applied in liquid form, as a solution in an inert solvent or in the form of an aqueous emulsion.

The polyisocyanate component which is used in the present invention in the binder system can be any organic polyisocyanate and include aliphatic, alicyclic and aromatic polyisocyanates that contain at least two isocyanate groups per molecule. Such polyisocyanates include the diisocyanates and higher functionality isocyanates. Mixtures of polyisocyanates may be used which for example are the mixtures of di- and higher functional polyisocyanates produced by phosgenation of aniline-formaldehyde condensate or as described in U.S. Patent Nos. 3,962,302 and 3,919,279. The organic polyisocyanates may be isocyanate-ended prepolymers made by reacting under standard known conditions, an excess of a polyisocyanate with a polyol which on a polyisocyanate to polyol basis may range from about 20:1 to 2:1 and include for example polyethylene glycol, polypropylene glycol, triethylene glycol, etc. as well as glycols or polyglycols partially esterified with carboxylic acids including polyester polyols and polyether polyols. Illustrative of organic polyisocyanates which may be employed include for example, toluene-2,4- and 2,6-diisocyanates or mixtures thereof, diphenylmethane diisocyanate, m- and p-phenylene diisocyanates or mixtures thereof, m- and p-diphenylene diisocyanates, polymethylene polyphenyl isocyanates, naphthalene-1,5-diisocyanate, chlorophenylene diisocyanate, α,α-xylene diisocyanate, triphenylmethane triisocyanate, hexamethylene diisocyanate, 3,3'-ditolylene-4,4-diisocyanate, butylene 1,4-diisocyanate, octylene-1,8-diisocyanate, 1,4-, 1,3- and 1,2-cyclohexylene diisocyanate and in general the polyisocyanates disclosed in U.S. Patent No. 3,577,358, 3,012,008 and 3,097,191. The preferred polyisocyanates are the diphenylmethane diisocyanate 2,4' and 4,4' isomers including the 2,2' isomer and the higher functional polyisocyanate and polymethylene polyphenyl isocyanate mixtures, which may contain from about 20 to 85 weight percent of the diphenylmethane diisocyanate isomers. Typical of the preferred polyisocyanates are those sold commercially as "Rubinate-M" (Rubicon Chemicals, Inc.). In general the organic polyisocyanates will have a molecular weight in the range between about 100 and 10,000. The aqueous organic polyisocyanate or isocyanate-terminated prepolymer emulsions are generally prepared by using any of the techniques known in the art for the preparation of aqueous emulsions or dispersions prior to use of the composition as binder. In general the polyisocyanate is dispersed in water in the presence of an emulsifying or surface active agent which may be any of the emulsifying agents also known in the art including anionic and nonionic agents. Preparation of the aqueous emulsions may be carried out as described in U.S. Patent Nos. 3,996,154; 4,143,014 and 4,257,995.

The lignocellulosic materials employed to prepare the molded compositions using polyisocyanate binders include wood chips, wood fibers, shavings, sawdust, wood wool, cork bark and the like products from the woodworking industry. Fibers, particles, etc. from other natural products which are lignocellulosic such as straw, flax residues, dried weeds and grasses, nut shells, hulls from cereal crops such as rice and oats and the like may be used. In addition, the lignocellulosic materials may be mixed with inorganic flakes or fibrous material such as glass fibers or wool, mica and asbestos as well as with rubber and plastic materials in particulate form. The lignocellulose may contain a moisture (water) content of up to 25 percent by weight but preferably contains between 4 and 12 percent by weight moisture.

The release agents of the present invention, consisting of a terpolymer of a functional polysiloxane, an isocyanate and a hydroxyl substituted monocarboxylic acid or metal salt thereof, may be prepared by

reacting, with or without an inert solvent such as aromatic or aliphatic hydrocarbons, e.g., toluene, xylene, benzene, heptane, hexane, etc. to control and maintain solution viscosity, at a temperature of from about 50°C. to 150°C. and preferably 90°C. to 110°C. an excess of a functional polyisocyanate having the formula

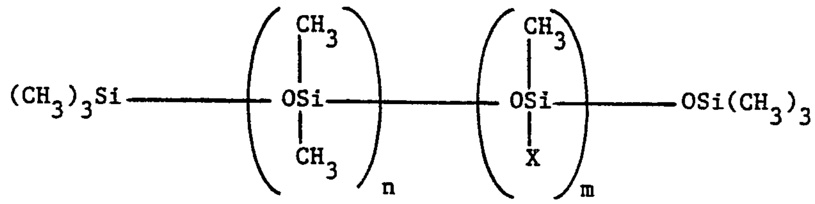

wherein n is from 5 to 30, m is from 1 to 20 and X is a group selected from $—CH_2OH$, $—CH(CH_3)OH$, —COOH, $—C(CH_3)_2OH$, or —OH, with a hydroxyl substituted derivative of a monocarboxylic acid or metal salt thereof having the formula $[CH_3—(CH_2)y—COO]_xZ$ thus forming a copolymeric reaction product which is then reacted at a temperature of from about 50°C. to 150°C. preferably 90°C. to 110°C. with no more than a stoichiometric amount of the isocyanate having the formula R—NCO, to form the terpolymer.

Preferred isocyanates of the formula R—NCO are hexamethylene diisocyanate, phenylisocyanate and polymethylene polyphenol polyisocyanates containing from 20 to 85 percent by weight diphenyl methane diisocyanate.

The condensation reaction to form the terpolymer release agent may be considered completed when no free NCO can be detected by known analytical methods such as Infra Red. The reaction with the isocyanate and copolymer reaction product may be carried out in the presence of from 0 to 50 weight percent inert aqueous free (dry) solvents containing no hydroxyl groups such as the aromatic or aliphatic hydrocarbons, e.g. toluene, xylene, heptane, hexane, etc., to maintain and control solution viscosity. 5 to 50 percent solids solutions may be prepared by the condensation process but the terpolymers are preferably prepared and applied as 10 to 20 percent solids solutions.

As indicated herein above organopolysiloxane fluids may be employed along with the terpolymer release agents as a diluent and are used in amounts of up to 25 weight percent, preferably from 10 to 20 weight percent, based on the total terpolymer release agent-organopolysiloxane fluid mixture. The organopolysiloxane fluids suitable for use in this invention are generally alkyl-terminated polysiloxane fluids having from 1 to 18 carbon atoms bonded to the silicon atom. Examples of suitable organopolysiloxane fluids are those having alkyl radicals such as methyl, ethyl, propyl, butyl, hexyl, octyl, decyl, dedecyl, tetradecyl, hexadecyl, octadecyl and the like; aryl radicals such as phenyl and naphthyl and mixtures thereof. Generally, it is preferred that the organopolysiloxane be free of terminal-hydroxyl groups; however, a small number of terminal-hydroxyl groups will not materially affect the mold release composition. The organopolysiloxane may have a minor proportion of molecules with only one hydroxyl group or there may be a small number of molecules present carrying in excess of two hydroxyl groups. However, as mentioned previously, it is preferred that the organopolysiloxane be substantially free of hydroxyl groups. In general, the polysiloxane fluids should have a molecular weight of between about 3,000 and 90,000 which is equivalent to a viscosity of between about 0.05 and 100 Pa.s (50 and 100,000 centipoises), preferably from about 0.1 to 5 Pa.s (100 to 5,000 centipoises). Optimum results have been obtained in the lower portion of these ranges such as from about 0.2 to 0.5 Pa.s (200 to 500 centipoises). In addition, it is possible to combine high and low viscosity fluids to form a fluid having the desired viscosity range.

The organopolysiloxane fluids used in accordance with this invention may be represented by the formula

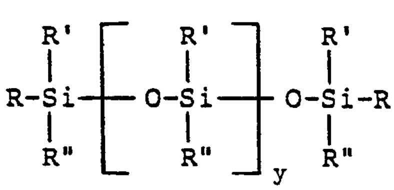

wherein R, R′ and R″ which may be the same or different represent organic groups having from 1 to 18 carbon atoms, preferably alkyl groups having from 1 to 4 carbon atoms, and y has a value of from 80 to about 150,000.

The novel mold release agents of the instant invention, whether the polysiloxane-monocarboxylic acid or salt-isocyanate terpolymer alone or the terpolymer admixed with an organopolysiloxane fluid, may be employed in a liquid organic solvent which would preferably be sufficiently volatile to vaporize during the application process. Preferred solvents include toluene, xylene, benzene, naphtha type solvents, $C_4$ to $C_{10}$ alcohols such as isobutanol and chlorinated hydrocarbon solvents such as perchloroethylene.

The functional polysiloxane-monocarboxylic acid or salt-isocyanate terpolymer release agent may be

applied to the mold surfaces as a concentrated or dilute solution or as a dispersion. It is preferred that the release agent composition be dissolved in a volatile organic solvent such as a mixture of toluene and isobutanol and then sprayed, wiped or brushed onto the mold surfaces in the form of a thin film. This may best be obtained by rubbing the mold surface or surfaces with a swab saturated with a solution of the release composition. However, when practical, the mold surfaces may be sprayed with the composition to form a thin film thereon.

Once the release composition has been applied to the mold surfaces, it may be used immediately. However, it is preferred that the coating be dried especially when an organic solvent has been used. More preferably, as indicated hereinbefore the coated mold surfaces are heated to between about 75° to 200°C. for from 1 to 5 minutes to fill all pores and openings and to provide for an essentially permanent release or longer production use cycles.

The following examples are provided to illustrate the invention in accordance with the principles of this invention, including examples of a comparative nature, but are not to be construed as limiting the invention in any way except as indicated by the appended claims.

## Example 1

580 grams of pine wood chips dried to a moisture content of 6 percent were placed in an open tumbler-mixer. During tumbling 16 grams of a diphenylmethane diisocyanate-polymethylene polyphenylisocyanate (PMDI) mixture having a 46.5 percent diphenylmethane diisocyanate content as a binder was sprayed evenly onto the wood chips by an air pressurized system. Two new aluminum caul plates 305 × 305 × 4.75 mm (12″ × 12″ × 3/16″) are wiped with a cloth saturated with a terpolymer release agent mixture of 10 parts by weight of a polymerization reaction product of a silanol (—$CH_2OH$) terminated polydimethyl siloxane, having a molecular weight of 28,000, 12-hydroxy stearic acid, and a diphenylmethane diisocyanate-polymethylene polyphenyl isocyanate (PMDI) mixture having a 46.5% diphenylmethane diisocyanate content and 90 parts by weight toluene. The terpolymer was prepared by charging 50 grams of silanol (—$CH_2OH$) terminated polydimethyl siloxane (MW 28,000) and 6 grams 12-hydroxy stearic acid into a 250 ml reaction flask in 50% by weight toluene. The reaction was run for $3\frac{1}{2}$ hours at 90°C. in nitrogen with steady stirring. The reaction was cooled and .23 grams of diphenylmethane diisocyanate-polymethylene polyphenyl isocyanate (PMDI) having 46.5% diphenylmethane diisocyanate was charged into the reaction flask. The complete mixture of materials was reacted for 4 additional hours at 100°C. in nitrogen under steady stirring at which time no free NCO could be detected by infra red analysis. Toluene was added to make a solution of 10% solids. The polyisocyanate coated wood chips were then preformed in a box 267 mm (10.5 inches) square and 305 mm (12 inches) high which was supported by one of the terpolymer release agent coated caul plates and prepressed to form a thick mat. The box was then taken out and the second coated caul plate placed on top of the mat. The whole assembly was subjected to a temperature of 190°C., pressed to stops at a thickness of 13 mm and held for 4 minutes and the pressure released. The lignocellulosic (wood chip board) composite was easily released from the caul plates. The board making procedure as above was repeated four additional times using the same originally coated caul plates with easy release of the composite.

## Example 2

The procedure of Example 1 was repeated except that the aluminum caul plates wiped with the silanol terminated polydimethyl siloxane-12 hydroxy stearic acid-isocyanate terpolymer release agent mixture was heated at 176°C. for 3 minutes prior to use. Six repeated cycles of board preparation and release at 190°C. were recorded.

## Examples 3 to 8

Various terpolymers of functional polydimethyl siloxanes, molecular weight 28,000, with a hydroxy substituted monocarboxylic acid or metal salt thereof were prepared by reacting 1 part by weight of the siloxane and 1 part by weight of the acid or metal salt in a 250 ml reaction flask with 50% by weight toluene. The siloxane-acid reaction was run for four hours at 95°C. in nitrogen with stirring, cooled and then reacted with 1 part by weight of diphenylmethane diisocyanate-polymethylene polyisocyanate (PMDI) having 46.5% diphenyl methane diisocyanate which reaction was run for 4 hours at 100°C. in nitrogen with stirring until no free NCO could be detected by infra red analysis. Toluene was added to provide a 10% solids solution. The procedure of Example 1 was repeated to produce particle board using the release agents and giving the release cycles as indicated below.

| Example No. | Terpolymer Release Agent | Release Cycles at 190°C. |
|---|---|---|
| 3 | Silanol (—$CH_2OH$) terminated Polydimethyl Siloxane and 12-Hydroxy Calcium Stearate with PMDI | 4 |
| 4 | Silanol (—$CH_2OH$) terminated Polydimethyl Siloxane and 12-Hydroxy Iron Stearate with PMDI | 5 |
| 5 | Carbinol (—COH) terminated Polydimethyl Siloxane and 12-Hydroxy Potassium Oleate with PMDI | 6 |
| 6 | Carboxy (—COOH) terminated Polydimethyl Siloxane and 12-Hydroxy Stearic Acid with PMDI | 7 |
| 7 | Silanol (—$CH_2OH$) terminated Polydimethyl Siloxane with 2-Hydroxy Capric (decanoic) Acid and phenylisocyanate | 5 |
| 8 | Silanol (—$CH_2OH$) terminated Polydimethyl Siloxane with 12-Hydroxy palmitic (hexadecanoic) and hexamethylene diisocyanate | 6 |

Example 9

The procedure of Example 2 was repeated employing 85% of the terpolymer of Example 1 mixed with 15% polysiloxane fluid and diluted to a 10% solids solution with toluene. Six repeated cycles of particle board preparation and release at 190°C. were recorded.

Example 10

The procedure of Example 2 was repeated employing an 80:20 mixture of the terpolymer of Example 5 and polydimethyl siloxane fluid diluted to 10% in a 50:50 mixture of toluene and isobutanol. Five repeated cycles of particle board preparation and release at 190°C. were recorded.

Example 11 Control

Example 1 was repeated except that no release agent was applied to the caul plates. The pressed lignocellulosic composite could not be released even after cooling down.

Example 12 Control

Examples 1 and 2 were repeated except that the caul plates in three composite preparations were wiped with a 15% solution of zinc stearate, aluminum stearate and lithium stearate in isobutanol. Only one cycle of release was recorded with each when hot (190°C.).

**Claims**

1. A process for the preparation of lignocellulosic composite molded articles wherein lignocellulosic particles are contacted with an organic polyisocyanate-based binder composition and the treated particles are subsequently formed into molded articles by the application of heat and pressure, characterised in that a film coating of a terpolymer which is formed by reacting a functional polysiloxane, a hydroxyl substituted monocarboxylic acid or metal salt thereof and an isocyanate is provided on the mold surface or surfaces to facilitate release of the lignocellulosic molded article, said functional polysiloxane having the formula:

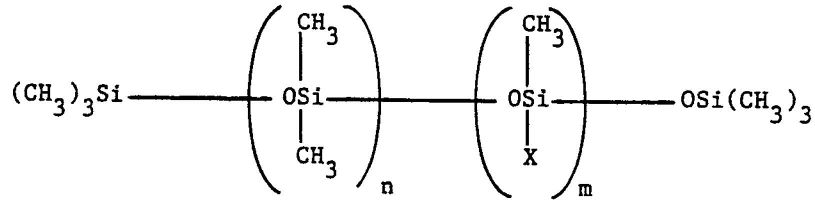

wherein n is an integer of from 5 to 30, m is an integer of from 1 to 20 and X is a group selected from $-CH_2OH$, $-CH(CH_3)OH$, $-C(CH_3)_2OH$, $-COOH$ or $-OH$, said hydroxyl substituted monocarboxylic acid or metal salt thereof being a hydroxyl substituted derivative of an acid or salt having the formula $[CH_3-(CH_2)_y-COO]_xZ$ wherein y is an integer of from 5 to 24, Z is a group selected from hydrogen, Na, Li, Ca, Ba, Cd, Mg, K and Fe, and x is the valency of Z, and said isocyanate having the formula R—NCO wherein R is a group selected from

$-CH_2(CH_2)_y-NCO$, $CH_3-(CH_2)_y-$, 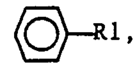, 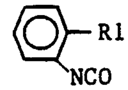 or 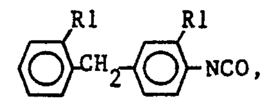, R1

being hydrogen or an alkyl group having from 1 to 6 carbon atoms and y being an integer of from 1 to 20.

2. A process according to claim 1 wherein the lignocellulosic composite article is particle board.

3. A process according to claim 1 or claim 2 wherein the lignocellulosic composite is compressed between metal platens at a temperature of from 140°C. to 220°C. and a pressure of from $6.9 \times 10^2$ kPa and $4.3 \times 10^3$ kPa (100 psi and 600 psi) for a period of from 1 to 10 minutes, preferably 3 to 5 minutes.

4. A process according to any one of claims 1 to 3 wherein the coated mold surface or surfaces are heated at a temperature of from 75°C. to 200°C. for a period of from 1 to 5 minutes prior to preparation of lignocellulosic composite molded articles.

5. A process according to any one of claims 1 to 4 wherein the organic polyisocyanate binder is selected from diphenylmethane diisocyanate and polymethylene polyphenyl polyisocyanates containing from 20 to 85 percent by weight diphenylmethane diisocyanate.

6. A process according to any one of claims 1 to 5 wherein in the functional polysiloxane, X is selected from $-CH_2OH$, $-C(CH_3)_2OH$ and $-COOH$.

7. A process according to any one of claims 1 to 6 wherein the hydroxyl substituted monocarboxylic acid of the terpolymer is 12-hydroxy stearic acid.

8. A process according to any one of claims 1 to 7 wherein the isocyanate of the terpolymer is selected from hexamethylene diisocyanate, phenylisocyanate and polymethylene polyphenyl polyisocyanates containing from 20 to 85% by weight diphenylmethane diisocyanate.

9. A process according to any one of claims 1 to 8 wherein up to 25 weight percent and preferably between 10 and 20 weight percent, organopolysiloxane fluids, based on the combined weight of the terpolymer and said fluids, is added as diluent.

10. A process according to any one of claims 1 to 9 wherein the terpolymer, or combination of terpolymer and organopolysiloxane fluids, is applied in admixture with a solvent which is preferably selected from toluene, isobutanol and mixtures thereof.

11. A lignocellulosic composite molded article e.g. a composition board product, prepared by the process claimed in any one of claims 1 to 10.

12. As a new composition of matter, a terpolymer as specificed in any one of claims 1, 6, 7 and 8.

**Patentansprüche**

1. Verfahren zur Herstellung von lignocellulosehaltigen geformten Verbundgegenständen, bei dem Lignocelluloseteilchen mit einer organischen Bindemittelzusammensetzung auf Polyisocyanatbasis in Kontakt gebracht werden und die behandelten Teilchen anschließend durch Anwendung von Wärme und Druck zu gepreßten Gegenständen verformt werden, dadurch gekennzeichnet, daß eine Filmbeschichtung aus einem Terpolymeren, das durch Reaktion eines funktionellen Polysiloxans, einer hydroxysubstituierten Monocarbonsäure oder deren Metallsalz und einem Isocyanat gebildet wird, auf der oder den Oberfläche(n) der Form vorgesehen ist, um das Entformen des geformten Gegenstandes aus Lignocellulose zu fördern, wobei das funktionelle Polysiloxan die folgende Formel aufweist:

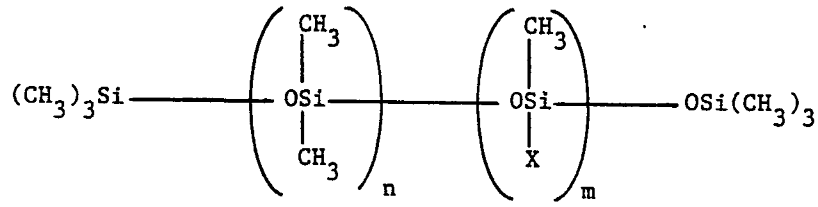

worin n eine ganze Zahl von 5 bis 30 ist, m eine ganze Zahl von 1 bis 20 ist, und X eine Gruppe ausgewählt aus $—CH_2OH$, $—CH(CH_3)OH$, $—C(CH_3)_2OH$, —COOH oder —OH ist, die hydroxylsubstituierte Monocarbonsäure oder deren Metallsalz ein hydroxylsubstituiertes Derivat einer Säure oder eines Salzes mit der Formel $[CH_3—(CH_2)_y—COO]_xZ$, ist, worin y eine ganze Zahl von 5 bis 24 ist, Z eine Gruppe ausgewählt aus Wasserstoff, Na, Li, Ca, Ba, Cd, Mg, K und Fe ist, und x die Valenz von Z ist, und das Isocyanat die Formel R—NCO aufweist, worin R eine Gruppe ausgewählt aus

$-CH_2(CH_2)_y-NCO$, $CH_3-(CH_2)_y-$, 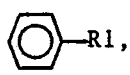, 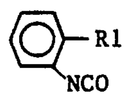 oder 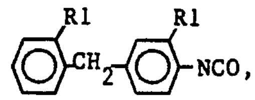,

ist, worin R1 Wasserstoff oder eine Alkylgruppe mit 1 bis 6 Kohlenstoffatomen und y eine ganze Zahl von 1 bis 20 ist.

2. Verfahren nach Anspruch 1, bei dem der Verbundgegenstand aus Lignocellulose eine Spanplatte ist.

3. Verfahren nach Anspruch 1 oder 2, bei dem der lignocellulosehaltige Verbundgegenstand zwischen Metallplatten bei einer Temperatur von 140°C bis 220°C und einem Druck von $6{,}9 \times 10^2$ kPa und $4{,}3 \times 10^3$ kPa (100 psi und 600 psi) für einen Zeitraum von 1 bis 10 Minuten, vorzugsweise 3 bis 5 Minuten, gepreßt wird.

4. Verfahren nach einem der Ansprüche 1 bis 3, bei dem die beschichtete Formoberfläche oder -oberflächen bei einer Temperatur von 75°C bis 220°C für einen Zeitraum von 1 bis 5 Minuten, vor der Herstellung der lignocellulosehaltigen geformten Verbundgegenstände erhitzt wird.

5. Verfahren nach einem der Ansprüche 1 bis 4, bei dem die organische Bindemittelzusammensetzung auf Polyisocyanatbasis aus Diphenylmethandiisocyanat und Polymethylenpolyphenylpolyisocyanaten, die 20 bis 85 Gew.-% Diphenylmethandiisocyanat enthalten, ausgewählt wird.

6. Verfahren nach einem der Ansprüche 1 bis 5, bei dem im funktionellen Polysiloxan X aus $—CH_2OH$, $—C(CH_3)_2OH$ und —COOH ausgewählt wird.

7. Verfahren nach einem der Ansprüche 1 bis 6, bei dem die hydroxylsubstituierte Monocarbonsäure des Terpolymeren 12-Hydroxystearinsäure ist.

8. Verfahren nach einem der Ansprüche 1 bis 7, bei dem das Isocyanat des Terpolymeren aus Hexamethylendiisocyanat, Phenylisocyanat und Polymethylenpolyphenylpolyisocyanaten, enthaltend 20 bis 85 Gew.-% Diphenylmethandiisocyanat, ausgewählt wird.

9. Verfahren nach einem der Ansprüche 1 bis 8, bei dem bis zu 25 Gew.-% und vorzugsweise zwischen 10 und 20 Gew.-%, Organopolysiloxanflüssigkeiten, bezogen auf das kombinierte Gewicht aus dem Terpolymeren und den Flüssigkeiten, als Verdünnungsmittel zugefügt wird.

10. Verfahren nach einem der Ansprüche 1 bis 9, bei dem das Terpolymere oder eine Kombination aus Terpolymer und Organopolysiloxanflüssigkeiten, vermischt mit einem Lösungsmittel, das vorzugsweise aus Toluol, Isobutanol und Mischungen davon ausgewählt wird, eingesetzt wird.

11. Geformter lignocellulosehaltiger Verbundgegenstand, z. B. eine Zusammensetzung für eine Platte, hergestellt durch das Verfahren gemäß einem der Ansprüche 1 bis 10.

12. Terpolymer, wie in einem der Ansprüche 1, 6, 7 und 8 spezifiziert, als neuer Stoff.

**Revendications**

1. Procédé pour la préparation d'articles moulés en composite lignocellulosique dans lequel des particules lignocellulosiques sont mises en contact avec une composition de liant à base de polyisocyanate organique et les particules traitées sont ensuite mises sous forme d'articles moulés par application de chaleur et de pression, caractérisé en ce qu'un revêtement pelliculaire d'un terpolymère qui est formé par réaction d'un polysiloxane fonctionnel d'un acide monocarboxylique substitué par une fonction hydroxy ou d'un sel métallique de celui-ci et d'un isocyanate, est fourni sur la ou les surfaces du moule pour faciliter le démoulage de l'article moulé lignocellulosique, ce polysiloxane fonctionnel ayant la formule:

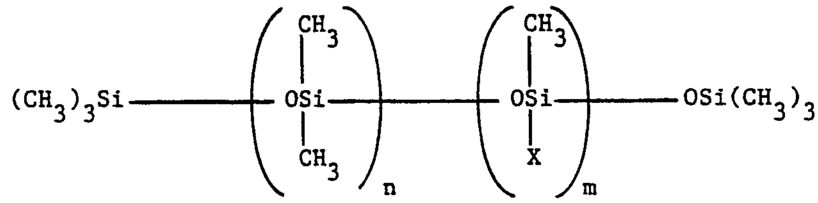

dans laquelle n est un entier de 5 à 30, m est un entier de 1 à 20 et X est un groupe choisi parmi $—CH_2OH$, $—CH(CH_3)OH$, $—C(CH_3)_2OH$, —COOH ou —OH, cet acide monocarboxylique substitué par une fonction hydroxy ou un sel métallique de celui-ci étant un dérivé hydroxy substitué d'un acide ou d'un sel ayant la formule $[CH_3—(CH_2)_y—COO]_xZ$ dans laquelle y est un entier de 5 à 24, Z est un groupe choisi parmi un atome d'hydrogène, Na, Li, Ca, Ba, Cd, Mg, K et Fe, et x est la valence de Z, et cet isocyanate ayant la formule R—NCO dans laquelle R est un groupe choisi parmi

$-CH_2(CH_2)_y-NCO$, $CH_3-(CH_2)_y-$, 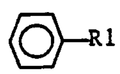, 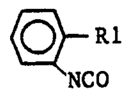 ou 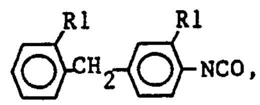, R1 étant un atome d'hydrogène ou un groupe alkyle ayant 1 à 6 atomes de carbone et y étant un entier de 1 à 20.

2. Procéde suivant la revendication 1, caractérisé en ce que l'article en composite lignocellulosique est un panneau de particules.

3. Procédé suivant la revendication 1 ou la revendication 2, caractérisé en ce que le composite lignocellulosique est comprimé entre des platines métalliques à une température de 140 à 220°C et sous une pression de $6.9 \times 10^2$ kPa à $4.3 \times 10^3$ kPa (100 psi à 600 psi) pendant une période de 1 à 10 minutes, de préférence 3 à 5 minutes.

4. Procédé suivant l'une quelconque des revendications 1 à 3, caractérisé en ce que la ou les surfaces enduites du moule sont chauffées à une température de 75° à 200°C pendant une période de 1 à 5 minutes avant la préparation des articles moulés en composite lignocellulosique.

5. Procédé suivant l'une quelconque des revendications 1 à 4, caractérisé en ce que le liant polyisocyanate organique est choisi parmi le diphénylméthane diisocyanate et des polyméthylène polyphényl polyisocyanates contenant de 20 à 85% en poids de diphénylméthane diisocyanate.

6. Procédé suivant l'une quelconque des revendications 1 à 5, caractérisé en ce que dans le polysiloxane fonctionnel, X est choisi parmi $—CH_2OH$, $—C(CH_3)_2OH$ et —COOH.

7. Procédé suivant l'une quelconque des revendication 1 à 6, caractérisé en ce que l'acide monocarboxylique substitué par la fonction hydroxy du terpolymère, est l'acide 12-hydroxystéarique.

8. Procédé suivant l'une quelconque des revendications 1 à 7, caractérisé en ce que l'isocyanate du terpolymère est choisi parmi l'hexémathylène diisocyanate, le phénylisocyanate et des polyméthylène polyphényl polyisocyanates contenant de 20 à 85% en poids de diphénylméthane diisocyanate.

9. Procédé suivant l'une quelconque des revendications 1 à 8, caractérisé en ce qu'on ajoute en tant que diluant, jusqu'à 25% en poids et de préférence de 10 à 20% en poids de fluides organopolysiloxanes, par rapport au poids combiné de terpolymère et de ces fluides.

10. Procédé suivant l'une quelconque des revendications 1 à 9, caractérisé en ce que le terpolymère ou la combinaison de terpolymère et des fluides organopolysiloxanes, est appliqué en mélange avec un solvant qui est de préférence choisi parmi le toluène, l'isobutanol et leurs mélanges.

11. Article moulé en composite lignocellulosique, par exemple un panneau de la composition, caractérisé en ce qu'il est préparé par le procédé suivant l'une quelconque des revendications 1 à 10.

12. Nouvelle compositon de matière, caractérisée en ce qu'il s'agit d'un terpolymère suivant l'une quelconque des revendications 1, 6, 7 et 8.